# EUROPÄISCHE PATENTANMELDUNG

(11) **EP 1 617 539 A1**
(43) Veröffentlichungstag der Anmeldung: **18.01.2006**
(21) Anmeldenummer: 04016578.9
(22) Anmeldetag: 14.07.2004
(51) Int. Cl.: H02K 1/18

(54) **Rotierende elektrische Maschine**

(71) Anmelder: SIEMENS AKTIENGESELLSCHAFT, 80333 München (DE)
(72) Erfinder: Benning, Klaus, 45479 Mülheim (DE); Pohlmann, Friedhelm, Dr., 45355 Essen (DE); Schattauer, Dora, 45473 Mülheim (DE)

(57) **Zusammenfassung**

Die vorliegende Erfindung betrifft eine Vorrichtung zur Führung eines Blechpakets an einem Gehäuse (4) und/oder an einer Welle eines Läufers einer rotierenden elektrischen Maschine, wobei das Blechpaket (2) eine Führungsnut aufweist, in die eine Führung des Gehäuses eingreift. Mit der Erfindung wird ferner eine rotierende elektrische Maschine mit einer erfindungsgemäßen Führung vorgeschlagen.

Der Erfindung liegt die Aufgabe zugrunde, eine gattungsgemäße rotierende elektrische Maschine derart weiterzubilden, dass das Blechpaket (2) dauerhaft zuverlässig und isoliert festlegbar ist.

Als Lösung wird mit der Erfindung vorgeschlagen, dass die Führung zumindest in einem Bereich einer Kontaktfläche mit der Führungsnut einen elektrisch isolierenden Werkstoff aufweist.

## Beschreibung

Die vorliegende Erfindung betrifft eine Vorrichtung zur Führung eines Blechpakets an einem Gehäuse und/oder an einer Welle eines Läufers einer rotierenden elektrischen Maschine, wobei das Blechpaket eine Führungsnut aufweist, in die eine Führung des Gehäuses eingreift. Ferner betrifft die Erfindung eine rotierende elektrische Maschine mit einer gattungsgemäßen Vorrichtung.

Gattungsgemäße rotierende elektrische Maschinen weisen in der Regel ein Blechpaket auf, welches die Aufgabe hat, den magnetischen Fluss in gewünschter Weise innerhalb der Maschine zu führen, um die Kraftwirkung zwischen Stator und Läufer möglichst optimal auszugestalten. Für eine beispielsweise an einem öffentlichen Energieversorgungsnetz betriebene rotierende elektrische Maschine ist dieses Blechpaket aus einzelnen isoliert zueinander angeordneten magnetisch permeablen Blechen gebildet. Diese Anordnung unterdrückt die Ausbildung von Wirbelströmen und führt somit zu einer Verbesserung des Gesamtwirkungsgrads der Maschine. Insbesondere im Mittel- und Hochleistungsbereich von elektrischen Motoren und Generatoren, wie zum Beispiel Turbogeneratoren in Kraftwerken, ist der Ausgestaltung des Blechpakets eine besondere Aufmerksamkeit zu widmen. Dabei erweist es sich gerade in diesem Bereich, insbesondere bei der Ausführung mit isolierten Spannelementen, als Problem, das Blechpaket oder die Blechpakete in dauerhaft zuverlässiger Weise elektrisch isoliert mit dem Läufer und/oder dem Stator zu verbinden.

Große Maschinen weisen in der Regel ein entsprechend großes Blechpaket auf, welches mittels Führungen am Gehäuse der elektrischen Maschine geführt ist. Die Führungen dienen zur Aufnahme von Kräften in Umfangsrichtung der elektrischen Maschine. Die Spannelemente sind in der Regel in axialer Richtung am Gehäuse der elektrischen Maschine isoliert befestigt. Diese Befestigungsart ermöglicht es, dass ein Freiheitsgrad in axialer Richtung der Maschine, in der die Spannelemente ausgerichtet sind, zwischen dem Gehäuse und dem Blechpaket ermöglicht wird. Dies dient einerseits dazu, mechanische Spannungen aufgrund der unterschiedlichen thermischen Ausdehnungskoeffizienten des Gehäuses und des Blechpakets zu vermeiden, zumal im bestimmungsgemäßen Betrieb Temperaturen bis beispielsweise etwa 95° C auftreten können, und es ermöglicht darüber hinaus eine vergleichsweise günstige Montage, da das Blechpaket blechweise in das Gehäuse eingeführt werden kann. Dies erweist sich gerade bei der Montage großer Maschinen als besonders vorteilhaft.

Ferner ist in der Regel vorgesehen, dass zwischen dem Blechpaket und dem Gehäuse eine elektrische Isolation vorgesehen ist, um eine erhöhte Sicherheit gegenüber Fehlerströmen bei fehlerhafter Blechisolation zu erhalten, beispielsweise wenn Schäden an der Isolation zu Durchschlägen zum Blechpaket führen und somit Eisenbrand verursachen können.

Es ist bekannt, das Blechpaket mittels in Nuten eingreifenden Schwalbenschwanzschienen beispielsweise am Gehäuse oder der Läuferwelle der Maschine zu führen. Diese Schwalbenschwanzschienen sind aus Aluminium gebildet. Um eine elektrische Verbindung zwischen den einzelnen Blechen des Blechpakets über die Schwalbenschwanzschiene zu verhindern, wird die Schwalbenschwanzschiene mittels Isolationshülsen, Isolationsscheiben und Isolationsstreifen elektrisch vom Blechpaket isoliert angeordnet. Diese Art der Anordnung ist nicht nur mechanisch aufwändig und erfordert während der Montage einen hohen Kontroll- und Prüfaufwand, sondern sie unterliegt aufgrund der mechanischen Beanspruchung wie Krafteinwirkung, Vibrationen oder dergleichen einem erhöhten Verschleiß. Beim Stand der Technik sind daher entsprechend kurze Wartungsintervalle vorgesehen, bei der die entsprechenden Isolationsstellen überprüft und ggf. Reparaturen ausgeführt werden.

Daneben ist bei etlichen Bauarten gattungsgemäßer Maschinen weder eine Reparatur noch eine Wartung vorgesehen. Bei diesen Maschinen sind die Isolierteile im Bereich der Schwalbenschwanzschienen nicht zugänglich und können daher weder gewartet noch repariert werden. Ein Defekt in diesem Bereich kann daher unweigerlich den Ausfall der gesamten Maschine nach sich ziehen. Gerade bei großen Maschinen bedeutet dies jedoch einen erheblichen Kostenfaktor, insbesondere wenn die Maschine über einen längeren Zeitraum abgeschaltet wird. So muss beispielsweise bei einem Generator eines Kraftwerks das gesamte Kraftwerk erst heruntergefahren werden, um den Generator in den Wartungszustand bringen zu können. Bei großen Anlagen ist dies ein enormer Kostenaufwand.

Der Erfindung liegt daher die Aufgabe zugrunde, eine gattungsgemäße rotierende elektrische Maschine derart weiterzubilden, dass das Blechpaket dauerhaft zuverlässig und isoliert anordbar ist.

Als Lösung wird mit der Erfindung vorgeschlagen, dass die Führung zumindest in einem Bereich einer Kontaktfläche mit der Führungsnut einen elektrisch isolierenden Werkstoff aufweist.

Durch Einsatz einer Vorrichtung zumindest teilweise aus einem elektrisch isolierenden Werkstoff wird erstmals die Möglichkeit geschaffen, eine Vielzahl von zusätzlichen Bauteilen einzusparen und die mit deren Verwendung entstehenden zusätzlichen Zuverlässigkeitsprobleme zu vermeiden. Mit der vorliegenden Erfindung ist es möglich, das Blechpaket einzig durch Verwendung der erfindungsgemäßen Vorrichtung in der elektrischen Maschine zu führen. Dadurch, dass das Befestigungselement aus einem elektrisch isolierenden Werkstoff besteht, wird die Isolation zwischen dem Blechpaket und dem Maschinenteil, an dem das Blechpaket geführt wird, beispielsweise das Gehäuse, nicht nur verbessert, sondern darüber hinaus auch eine größere Zuverlässigkeit erreicht. Als Werkstoff können beispielsweise verstärkte und/oder unverstärkte Duroplaste oder hochtemperaturfeste Thermoplaste zum Einsatz kommen, wie beispielsweise PEEK, PPS oder EP GC-Material.

Das üblicherweise geerdete Maschinenteil ist somit bereits durch die erfindungsgemäße Vorrichtung gegenüber dem Blechpaket elektrisch isoliert. In der Regel ist das Blechpaket an wenigstens einer Stelle geerdet. Der übrige Teil des Blechpakets ist isoliert mit dem Gehäuse verbunden. Die Erdung kann zum Beispiel an einer Stelle des Blechpakets mittels eines Erdbalkens oder dergleichen ausgeführt sein.
Mechanische Einflüsse, die bei einem Isolierstreifen zu einer Beschädigung und somit zu einer elektrischen Kontaktierung führen würden, können reduziert werden beziehungsweise bei einem vergleichbaren Aufbau mit einer erfindungsgemäßen Vorrichtung erheblich weniger Beeinträchtigungen verursachen.

In der Regel sind Läufer und/oder Gehäuse mit dem Erdpotential verbunden, so dass ein Defekt der Isolation zum Blechpaket zu unerwünschten Ableitströmen führen würde. Hier bietet die erfindungsgemäße Führung des Blechpakets eine deutliche Verbesserung gegenüber dem Stand der Technik, denn die Isolation wird nicht mehr nur durch einen dünnwandigen Isolierstreifen gewährleistet, sondern durch die Vorrichtung selbst. Darüber hinaus sind für die Befestigungsmittel, mit denen die Vorrichtung ggf. am Läufer und/oder am Stator festgelegt wird, ebenfalls keine weiteren Isolationsmittel wie Unterlegscheiben, Isolierhülsen und dergleichen erforderlich. Diese können nicht nur eingespart werden und reduzieren damit den Herstellaufwand, sondern sie müssen im Rahmen einer Wartung nicht mehr geprüft werden, da sie nicht mehr vorhanden sind. Ferner können Fehlerstellen aufgrund dieser Befestigungsmittel vermieden werden.

Es wird ferner vorgeschlagen, dass die Führung vollständig aus dem elektrisch isolierenden Werkstoff gebildet ist. So kann eine einfach herzustellende und kostengünstige Führung erreicht werden. Die Führung kann z. B. aus einem Polymer oder auch aus einem keramischen Werkstoff gebildet sein. Sie kann darüber hinaus aber auch aus einem Verbundwerkstoff gebildet sein, z. B. einem geeigneten Kunststoff der durch Fasern verstärkt ist, beispielsweise Glasfasern, Keramikfasern oder dergleichen.

In einer weiteren Ausgestaltung wird vorgeschlagen, dass der elektrisch isolierende Werkstoff durch eine Pulverlackbeschichtung gebildet ist. Eine genaue sachgemäße Isolierung kann erreicht werden. Darüber hinaus kann mit bekannten Pulverlackbeschichtungsverfahren die Führung kostengünstig mit dem isolierenden Werkstoff versehen werden. Neben der kostengünstigen Herstellung kann ferner eine hohe Qualität des elektrisch isolierenden Werkstoffs auf der Führung erreicht werden, die zudem von Montageeinflüssen weitgehend unabhängig ist.

In einer vorteilhaften Weiterbildung wird vorgeschlagen, dass die Führung durch ein Profilelement gebildet ist. Diese Art der Führung eignet sich besonders für den Großmaschinenbereich, wobei mehrere Führungen über den Umfang der Maschine verteilt in axialer Richtung angeordnet sind, um das entsprechend in Umfangsrichtung angeordnete Blechpaket in Umfangsrichtung festzulegen. Durch geeignete Ausgestaltung des Profils und durch entsprechende Ausgestaltung des Blechpakets kann dieses beispielsweise mittels der Führung in Umfangsrichtung oder zusätzlich in radialer Richtung festgelegt werden. Das Profilelement kann als Vollprofil oder auch als Hohlprofil mit unterschiedlichen Profilquerschnitten ausgebildet sein. Ferner kann ein Hohlprofil mit einem weiteren Werkstoff gefüllt sein, um besondere gewünschte Eigenschaften zu erhalten.

Darüber hinaus wird vorgeschlagen, dass das Profilelement einen trapezförmigen Querschnitt aufweist. Es ist somit vorteilhaft möglich, mit der Vorrichtung eine bereits bekannte Schwalbenschwanzschienenbefestigung des Blechpaketes zu bilden, so dass nicht nur eine mit geringem Aufwand verbundene Einführung in eine Produktion ermöglicht wird, sondern auch ein Nachrüsten bereits bestehender Maschinen ermöglicht wird. Eine Reduzierung der Standzeiten der elektrischen Maschine sowie einem damit verbundenen Nutzenausfall kann reduziert werden. Darüber hinaus kann die Zuverlässigkeit bestehender elektrischer Maschinen erhöht werden. Der Querschnitt des Profilelements kann daneben auch quadratisch, rechteckig, rund oder dergleichen ausgebildet sein.

In einer weiteren Ausgestaltung wird vorgeschlagen, dass die Führung mittels eines Befestigungselements am Gehäuse festlegbar ist. So kann die Führung als separates Bauteil zum Gehäuse hergestellt werden und mittels bekannter Befestigungstechniken, wie Nieten, Schrauben oder dergleichen, am Gehäuse festgelegt sein. Es kann aber auch vorgesehen sein, dass das Befestigungselement durch eine weitere Nut am Gehäuse gebildet ist, in die die Führung eingeführt wird.

In einer Weiterbildung der vorliegenden Erfindung wird vorgeschlagen, dass die Führung einstückig mit dem Gehäuse ausgebildet ist. So kann vorgesehen sein, dass während der Herstellung des Gehäuses gleichzeitig die entsprechende Führung für das Blechpaket mit ausgeformt wird. Eine separate Befestigung kann eingespart werden. Herstellkosten können weiter reduziert werden.

Darüber hinaus wird vorgeschlagen, dass die Führungsnut des Blechpakets im Querschnitt im Wesentlichen eine Trapezform aufweist. Vorteilhaft kann erreicht werden, dass bei Ausführung der Nut zur Aufnahme eines Schwalbenschwanzprofils nicht nur eine Festlegung des Blechpakets in Umfangsrichtung erreicht werden kann, sondern darüber hinaus auch eine Festlegung in radialer Richtung.

Mit der Erfindung wird ferner eine rotierende elektrische Maschine mit einem drehfest mit einem Gehäuse verbundenen Stator und einem drehbar gelagerten Läufer vorgeschlagen, wobei der Stator und/oder der Läufer ein Blechpaket aufweisen und das Blechpaket des Stators am Gehäuse und das Blechpaket des Läufers an einer Läuferwelle geführt sind, wobei eine erfindungsgemäße Vorrichtung zum Einsatz kommt. Eine deutliche Erleichterung der Montage bzw. der Wartung der Maschine kann erreicht werden, da eine Vielzahl von Isolierstreifen und weiteren Isolierelementen gegenüber dem gattungsgemäßen Stand der Technik eingespart werden können. Dies wirkt sich insbesondere auf die Zuverlässigkeit der elektrischen Maschine aus, wodurch die Betriebskosten der Maschine reduziert werden können. Die erhöhte Zuverlässigkeit ermöglicht es darüber hinaus, derartige Maschinen verstärkt in Bereichen einzusetzen, bei denen es besonders auf die Zuverlässigkeit ankommt, beispielsweise bei sicherheitsrelevanten Einrichtungen wie Maschinen für den Einsatz im Bergbau, Fahrstühle oder dergleichen sowie insbesondere auch im Energieversorgungsbereich wie z. B. in Kraftwerken oder dergleichen.

In einer vorteilhaften Weiterbildung der vorliegenden Erfindung wird vorgeschlagen, dass die elektrische Maschine ein elektrischer Generator ist. Die elektrische Maschine kann beispielsweise ein Turbogenerator in einem Kraftwerk zur Erzeugung elektrischer Energie sein. Eine höhere Zuverlässigkeit der elektrischen Energieversorgung kann erreicht werden, da die Zuverlässigkeit der Isolation zwischen Blechpaket und Läufer und/oder Gehäuse erhöht werden kann. Im Energieversorgungsbereich können deutliche Kostenreduzierungen erreicht werden.

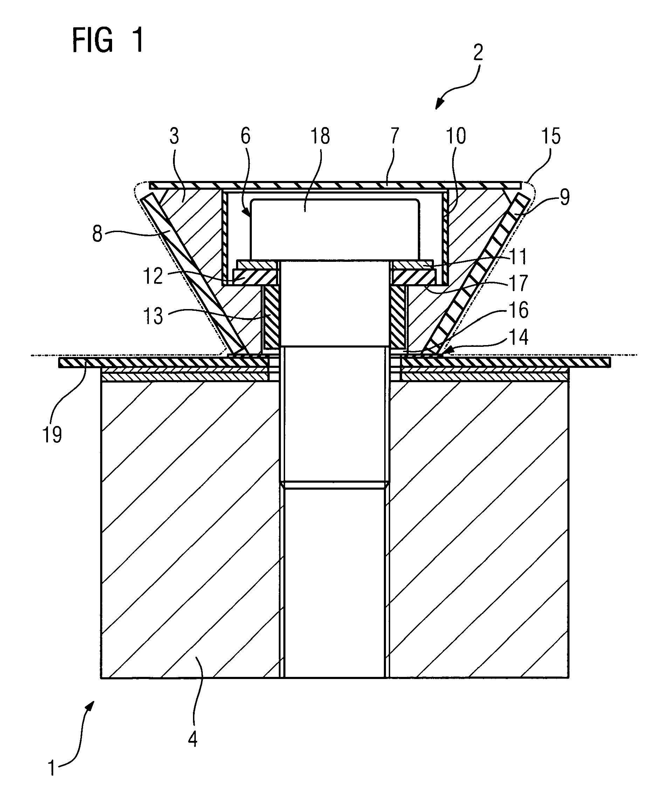

Weitere Vorteile und Merkmale sind der folgenden Beschreibung eines Ausführungsbeispiels zu entnehmen. Im Wesentlichen gleichbleibende Bauteile sind mit den gleichen Bezugszeichen bezeichnet. Ferner wird bezüglich gleicher Merkmale und Funktionen auf die Beschreibung zum Beispiel in Fig. 1 verwiesen.

Es zeigen:
- Fig. 1: schematisch einen Schnitt durch einen Ausschnitt zur Festlegung eines Blechpakets gemäß dem Stand der Technik und
- Fig. 2: eine Befestigung des Blechpakets wie in Fig. 1 mit einem erfindungsgemäßen Befestigungselement.

In Fig. 1 ist ein Ausschnitt aus einem elektrischen Turbogenerator eines Kraftwerks des Standes der Technik in Schnittansicht dargestellt, der ein Blechpaket 2 eines Stators 1 umfasst, welches an einem Gehäuse 4 des Generators angeordnet ist. Der Generator dient zur Energieversorgung für ein öffentliches Netz. Fig. 1 zeigt ferner eine schwalbenschwanzförmige Ausnehmung 15 des Blechpakets 2, in der zur Führung des Blechpakets 2 am Gehäuse 4 in axialer Richtung eine Schwalbenschwanzschiene 3 aus Aluminium mit einem trapezförmigen Querschnitt in isolierter Weise angeordnet ist.

Zur Herstellung der Isolation zwischen der Schwalbenschwanzschiene 3 und dem Blechpaket 2 sind Isolierstreifen 7, 8, 9, 14 in Erstreckungsrichtung der Schwalbenschwanzschiene 3 vorgesehen. Die Isolierstreifen 7, 8, 9 sind in Zwischenräumen zwischen dem Blechpaket 2 und der Schwalbenschwanzschiene 3 angeordnet, wohingegen der Isolierstreifen 14 an der gehäuseseitigen Fläche der Schwalbenschwanzschiene 3 angeordnet ist. Die Schwalbenschwanzschiene 3 ist mittels 51 Schrauben 6 am Gehäuse 4 festgelegt.

Da die Schraube 6 aus einem elektrischen leitfähigen Werkstoff ist und mit dem Gehäuse 4, welches mit dem Erdpotential verbunden ist, in Kontakt steht, ist eine isolierte Anordnung der Schraube 6 gegenüber der Schwalbenschwanzschiene 3 erforderlich. Zur Sicherstellung einer derartigen Isolation ist für jede Schraube eine Isolierhülse 13 sowie eine Isolierscheibe 12 vorgesehen, wobei die Isolierhülse 13 in einer Bohrung 16 der Schwalbenschwanzschiene 3 angeordnet ist und die Isolierscheibe 12 mittels einer Unterlegscheibe 11 vom Schraubenkopf 18 gegen einen Absatz 17 festgelegt ist. Weitere flächige Isolierschichten 19 sind vorgesehen, um das Blechpaket 2 elektrisch gegenüber dem Gehäuse 4 zu isolieren.

Das gesamte Blechpaket des Generators ist mit 22 derartigen Schwalbenschwanzschienen am Gehäuse 4 geführt.

An dieser Stelle wird auch der Nachteil des Stands der Technik offenbar, denn im praktischen Betrieb zeigt es sich, dass insbesondere die Isolierstreifen 7, 8, 9 einem erheblichen Verschleiß unterliegen. Die Befestigung des Blechpakets 2 am Gehäuse 4 unterliegt nicht nur mechanischen Beanspruchungen aufgrund von mechanisch einwirkenden Kräften wie Vibrationen, Bewegungen aufgrund von Magnetostriktion oder dergleichen, sondern wird darüber hinaus auch thermisch hoch beansprucht. Die Isolierstreifen 7, 8, 9, 14 bilden daher eine Schwachstelle, die die Zuverlässigkeit der Isolation erheblich beeinträchtigt.

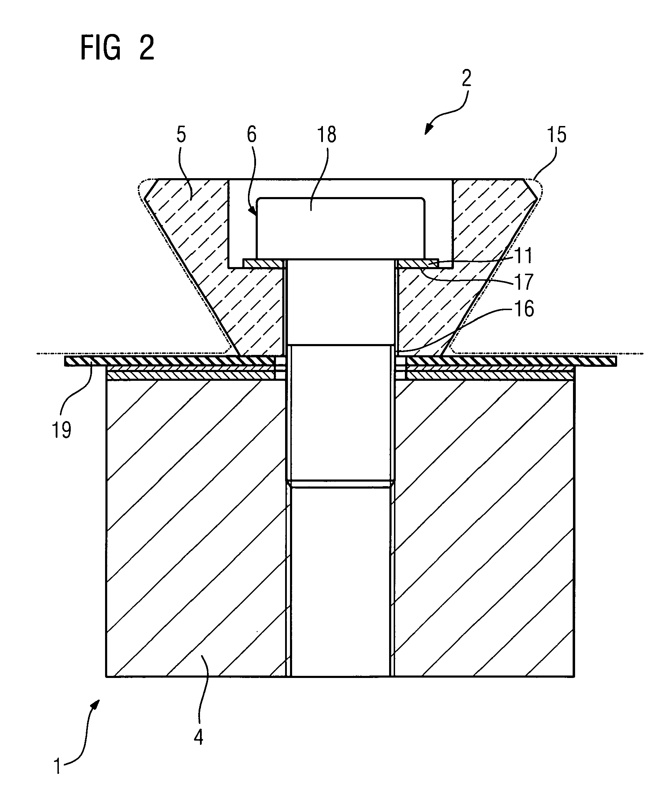

Hier schafft die vorliegende Erfindung eine deutliche Verbesserung, wie sich aus der folgenden Beschreibung eines Ausführungsbeispiels unter Bezug auf Fig. 2 ergibt. Gemäß Fig. 2 ist das Blechpaket 2 mittels einer Schwalbenschwanzschiene 5 aus Verbundwerkstoff oder Keramikverbundwerkstoff am Gehäuse 4 des Ständers 1 festgelegt. In der Keramik sind Glasfasern angeordnet, um die mechanische Beanspruchbarkeit zu erhöhen. Die Schwalbenschwanzschiene 5 ist wie in der vorherigen Ausgestaltung mittels Schrauben 6 am Gehäuse 4 festgelegt. Da die Schwalbenschwanzschiene 5 vollständig aus elektrisch isolierendem Werkstoff besteht, ist eine separate Isolation der Schraube 6 von der Schwalbenschwanzschiene 5 sowie des Blechpakets 2 gegenüber der Schwalbenschwanzschiene 5 nicht erforderlich. Die Montage vereinfacht sich daher deutlich, da sämtliche Isolierstreifen und Isolierhülsen eingespart werden können. Die Schwalbenschwanzschiene 5 weist Bohrungen 16 für die Schrauben 6 auf. Auch hier ist zwischen Schraubenkopf 18 und Absatz 17 eine Unterlegscheibe 11 angeordnet. Im Bereich der Schraube 6 kann ebenfalls jeglicher Isolationsaufwand eingespart werden. Sollte im Bereich der Schraubenköpfe 18 eine erhöhte Isolation zum Blechpaket 2 erforderlich sein, weil beispielsweise Luft- und Kriechstrecken zur Sicherstellung einer fachgerechten Isolation nicht ausreichen, so kann im Bereich der Schraubenköpfe 18 eine zusätzliche Isolation beispielsweise als Isolierstreifen vorgesehen sein. Es kann aber auch vorgesehen sein, dass der Schraubenkopf 18 selbst eine Isolierbeschichtung aufweist. Darüber hinaus können natürlich auch Schrauben 6 oder Nieten zum Einsatz kommen, die zumindest zum Teil aus Isolierstoff gebildet sind. Im vorliegenden Fall sind für eine Schwalbenschwanzschiene 5 genauso viele Schrauben 6 zur Befestigung vorgesehen wie für eine des Standes der Technik.

In einer weiteren Ausgestaltung der vorliegenden Erfindung besteht die Schwalbenschwanzschiene aus Aluminium, welches über seine gesamte Oberfläche mit einer Pulverlackbeschichtung versehen ist. Alle weiteren Merkmale entsprechen denen zum Ausführungsbeispiel zur Fig. 2.

Darüber hinaus kann eine erhöhte isolationstechnische Anforderung hinsichtlich der Sicherheit (z. B. doppelte Isolation oder auch verstärkte Isolation gemäß DIN-VDE) mit einfachen Mitteln erreicht werden, indem beispielsweise die Schwalbenschwanzschiene 3 in der Fig. 1 zum Stand der Technik durch eine erfindungsgemäße Schwalbenschwanzschiene ersetzt wird. Durch zusätzliches Vorsehen einer doppelten Isolation an den Befestigungsschrauben bzw. entsprechender Ausgestaltung der Kriech- und Luftstrecken zwischen leitfähigen Teilen kann mit geringem Aufwand die erhöhte Isolationsanforderung ausgeführt werden.
Die in den Figuren dargestellten Ausführungsbeispiele dienen lediglich der Erläuterung der Erfindung und sind für diese nicht beschränkend. So können insbesondere der Werkstoff und die Form der Schwalbenschwanzschiene sowie deren Festlegung am Gehäuse variieren, ohne den Schutzbereich der Erfindung zu verlassen.

## Patentansprüche

1. Vorrichtung zur Führung eines Blechpakets (2) an einem Gehäuse (4) und/oder an einer Welle eines Läufers einer rotierenden elektrischen Maschine,
wobei das Blechpaket (2) eine Führungsnut aufweist, in die eine Führung des Gehäuses eingreift,
**dadurch gekennzeichnet, dass**
die Führung zumindest in einem Bereich einer Kontaktfläche mit der Führungsnut einen elektrisch isolierenden Werkstoff aufweist.

2. Vorrichtung nach Anspruch 1,
**dadurch gekennzeichnet, dass**
die Führung vollständig aus dem elektrisch isolierenden Werkstoff gebildet ist.

3. Vorrichtung nach Anspruch 1 oder Anspruch 2,
**dadurch gekennzeichnet, dass**
der elektrisch isolierende Werkstoff durch eine Pulverlackbeschichtung gebildet ist.

4. Vorrichtung nach Anspruch einem der Ansprüche 1 bis 3,
**dadurch gekennzeichnet, dass**
die Führung durch ein Profilelement gebildet ist.

5. Vorrichtung nach Anspruch 4,
**dadurch gekennzeichnet, dass**
das Profilelement einen trapezförmigen Querschnitt aufweist.

6. Vorrichtung nach einem der Ansprüche 1 bis 5,
**dadurch gekennzeichnet, dass**
die Führung mittels einem Befestigungselement am Gehäuse (4) festlegbar ist.

7. Vorrichtung nach einem der Ansprüche 1 bis 5,
**dadurch gekennzeichnet, dass**
die Führung einstückig mit dem Gehäuse (4) ausgebildet ist.

8. Vorrichtung nach einem der Ansprüche 1 bis 7,
**dadurch gekennzeichnet, dass**
die Führungsnut des Blechpakets (2) im Querschnitt im wesentlichen eine Trapezform aufweist.

9. Rotierende elektrische Maschine mit einem drehfest mit einem Gehäuse (4) verbundenen Stator (1) und einem drehbar gelagerten Läufer,
wobei der Stator (1) und/oder der Läufer ein Blechpaket (2) aufweisen und das Blechpaket des Stators (1) am Gehäuse (4) und das Blechpaket des Läufers an einer Läuferwelle geführt sind,
**gekennzeichnet durch** eine Vorrichtung (3) nach einem der Ansprüche 1 bis 8.

10. Elektrische Maschine nach Anspruch 9,
**dadurch gekennzeichnet, dass**
die elektrische Maschine ein elektrischer Generator ist.
